# FASCICULE DE BREVET EUROPEEN

(11) **EP 1 600 240 B1**
(45) Date de publication et mention de la délivrance du brevet: **14.04.2010**
(21) Numéro de dépôt: 05103308.2
(22) Date de dépôt: 22.04.2005
(51) Int. Cl.: B23K 20/12

(54) **Procédé de bouchage, par soudage par friction, d'un trou d'une pièce métallique, utilisation d'une barre métallique et d'une pièce support de palier pour la mise en oeuvre du procédé**
Verfahren zum Verschliessen, mittels Reibschweissen, eines Loches in einem metallischen Teil, Verwendung eines metallischen Stabs und eines Wellenlagers zur Durchführung des Verfahrens
Method for stopping off, using friction welding, of a hole in a metallic part, use of a metallic bar and a support assembly for performing the method.

(30) Priorité: 27.04.2004 FR 0404430
(43) Date de publication de la demande: 30.11.2005
(73) Titulaire: SNECMA, 75015 Paris (FR)
(72) Inventeur: Bouet, Bernard, 77200, Gretz-Armainvilliers (FR); Ferte, Jean-Pierre, 91100, Corbeil Essonnes (FR); Gourbesville, Olivier, 78170, La Celle Saint Cloud (FR); Le Saunier, Didier, Bruno, 77200, Torcy (FR)
(74) Mandataire: David, Daniel

(56) Documents cités:
- GB-A- 2 233 923
- GB-A- 2 306 365
- US-A1- 2003 201 306

## Description

L'invention concerne un procédé de bouchage, par soudage par friction, d'un trou d'une pièce métallique. Un tel procédé est connu du document GB-A-2306365.

Le procédé de bouchage de trous par soudage par friction, plus connu sous le terme anglais de "friction plug welding", est utilisé pour boucher des trous dans une pièce métallique, en général des trous circulaires débouchant de chaque côté de la pièce, de forme tronconique ou cylindrique. Ce procédé est utilisé lorsqu'on souhaite limiter la perte de caractéristiques mécaniques, par rapport aux caractéristiques mécaniques de la pièce d'origine, au niveau de la zone de bouchage du trou.

Une barre métallique, généralement de même nature que le matériau de la pièce, est mise en rotation et introduite, sous l'action d'une force pilotée, dans le trou à boucher, la pièce contenant ce dernier restant fixe, perpendiculairement à la surface de la pièce dans la région du trou.

Les frictions entre la barre et la paroi du trou de la pièce provoquent l'échauffement des deux matériaux, leur plastification puis leur soudage en phase solide. Deux bourrelets sont formés de part de autre de la pièce. Il suffit alors d'usiner la barre et les bourrelets de chaque côté de la pièce pour réobtenir la pièce dans sa forme d'origine, avec son trou bouché.

Grâce au procédé de bouchage par soudage par friction, il est par exemple possible de réparer des trous de bride d'un turboréacteur qui se sont ovalisés : les trous ovalisés, après avoir été usinés convenablement, sont bouchés grâce au procédé puis percés de nouveau selon une forme correcte.

Toutefois, du fait de la forme des divers carters d'un turboréacteur et de la répartition des brides à leur surface, notamment, certaines brides ne sont pas accessibles pour la barre métallique dans le cadre du procédé. En effet, cette barre, reliée à sa machine d'entraînement, doit être orientée perpendiculairement à la surface de la bride ; elle ne peut donc pas permettre la mise en oeuvre du procédé si un espace de dégagement suffisant n'est pas disponible dans l'axe du trou, par exemple du fait d'obstacles sur cet axe, tels que d'autres brides. Ainsi, certains trous ne peuvent être bouchés par le procédé de bouchage par soudage par friction du fait de problèmes d'accessibilité.

Pour pallier cette lacune, ces trous de bride peuvent être bouchés à l'aide d'un bouchon métallique usiné, fixé grâce à une clavette, mais il est alors quasi impossible de le percer de nouveau.

On pourrait aussi développer un mécanisme de renvoi d'angle pour la barre métallique, mais un tel mécanisme est coûteux.

Il est également envisageable de développer une machine miniaturisée de bouchage par soudage par friction, mais un tel développement et la mise en oeuvre d'une telle machine sont également très coûteux.

Il est donc également peu pratique ou coûteux de mettre en oeuvre un procédé de bouchage de trou par soudage par friction sur des brides éloignées de l'emplacement de la machine supportant la barre de soudage.

La présente invention vise à proposer un procédé de bouchage par soudage par friction permettant d'atteindre des éléments difficiles d'accès.

A cet effet, l'invention concerne un procédé de bouchage, par soudage par friction, d'un trou, s'étendant globalement selon un axe, d'une pièce métallique, un espace de dégagement n'étant pas disponible dans l'axe du trou, du fait d'au moins un obstacle sur cet axe, dans lequel une barre métallique, s'étendant globalement suivant un axe, est mise en rotation autour de son axe et est introduite dans le trou, pour y être soudée par friction, caractérisé par le fait que l'axe de la barre est incliné par rapport à l'axe du trou d'un angle non nul pour éviter l'obstacle.

Grâce au procédé de l'invention, il est possible d'éviter des obstacles, gênant la mise en oeuvre du bouchage d'un trou par soudage par friction, en orientant la barre convenablement par rapport au trou et aux obstacles.

La demanderesse a découvert que de préférence, l'angle entre l'axe de la barre et l'axe du trou doit être inférieur ou égal à 11°.

Avantageusement, la barre comporte une tête de soudage de dimensions minimales pour assurer le soudage par friction, et une barre rigide de diamètre inférieur à celui de la tête et supportant la tête.

Avantageusement encore, la barre est supportée, à une extrémité, par une machine d'entraînement, en au moins un point entre ses deux extrémités, par un palier intermédiaire.

L'invention s'applique particulièrement à un procédé de bouchage, par soudage par friction, d'un trou d'une bride, en alliage d'aluminium, d'un carter d'un turboréacteur, mais la demanderesse n'entend pas limiter la portée de ses droits à cette seule application.

L'invention concerne en outre l'utilisation d'une barre métallique, pour la mise en oeuvre du procédé décrit ci-dessus, la barre comportant une tête de soudage et une barre rigide de diamètre inférieur au diamètre de la tête.

L'invention concerne également l'utilisation d'une pièce support de palier, pour la mise en oeuvre du procédé décrit ci-dessus, la pièce comportant un palier intermédiaire pour une barre de soudage.

L'invention sera mieux comprise grâce à la description suivante de la forme de réalisation préférée du procédé de l'invention, en référence aux dessins annexés, sur lesquels :
- la figure 1 représente une vue en coupe schématique de la mise en oeuvre de procédé de bouchage par soudage par friction d'un trou selon la forme de réalisation préférée du procédé de l'invention ;
- la figure 2 représente une vue en coupe schématique de la mise en oeuvre du bouchage par soudage par friction d'un trou de bride de turboréacteur selon une première forme de réalisation du procédé de l'invention, et
- la figure 3 représente une vue en coupe schématique de la mise en oeuvre du bouchage par soudage par friction d'un trou de bride de turboréacteur selon une seconde forme de réalisation du procédé de l'invention.

Le procédé de l'invention s'applique à une pièce métallique, ici une bride de turboréacteur 1 en alliage d'aluminium, dont on veut boucher un trou 2. En l'espèce, on veut boucher un trou de bride 2 qui s'est ovalisé, tout en conservant des propriétés mécaniques proches de celles du matériau de base, afin de pouvoir le percer de nouveau, une fois bouché, selon une forme correcte. A cet effet, on utilise un procédé de bouchage de trou par soudage par friction.

D'une manière générale, le trou dégradé, ici ovalisé, est préalablement usiné, afin de lui donner une forme cylindrique ou tronconique. Ce nouveau trou, ici le trou 2 que l'on va boucher, s'étend généralement suivant un axe perpendiculaire à la surface de la pièce, de préférence suivant le même axe suivant lequel s'étendait le trou d'origine. Ainsi, on élimine toute la surface dégradé du trou, afin de le rendre cylindrique ou tronconique, tout en minimisant le volume de matière enlevé.

Le trou 2 est ici de forme cylindrique. Il débouche sur une première face de la bride 1, qui sera considérée comme la face endroit 1' de la bride 1, et sur une seconde face de la bride 1, opposée à la face endroit 1', qui sera donc considérée comme la face envers 1" de la bride 1.

Dans le procédé de bouchage de trou par soudage par friction, une barre métallique 3, ici en alliage d'aluminium également, s'étendant suivant un axe 4, est mise en rotation autour de son axe 4 et vient, sous l'action d'une force pilotée, se souder par friction, en phase solide, à la bride 1. La barre métallique 3 comporte ici une portion d'extrémité de forme tronconique, adaptée aux dimensions du trou 2 et aux paramètres opératoires de l'homme du métier. Sa portion d'extrémité pourrait également être, en fonction du cas d'espèce, de forme cylindrique.

Le procédé de bouchage de trou par soudage par friction de l'invention se distingue des procédés de l'art antérieur en ce que la barre 3 est soudée à la bride 1 selon un axe 4 incliné par rapport à l'axe 5 du trou 2.

En effet, dans les procédés de l'art antérieur, la barre 3 est systématiquement soudée à la pièce 1, ici la bride 1, dans l'axe 5 du trou 2, c'est-à-dire que l'axe 4 de la barre 3 est confondu avec l'axe 5 du trou 2. Le trou 2 étant souvent percé perpendiculairement à la surface de la pièce 1, la barre 3 doit s'étendre perpendiculairement à la surface de la pièce 1, ce qui occasionne certains inconvénients énumérés auparavant. Au contraire, le procédé de l'invention propose de choisir un angle α entre l'axe 4 de la barre 3 et l'axe 5 du trou 2, ce qui autorise une plus grande flexibilité quant à l'accès de la barre 3 au trou 2, permettant d'éviter certains obstacles.

Le procédé de l'invention peut être mis en oeuvre, à l'instar des procédés de soudage par friction classiques de l'art antérieur, suivant divers modes opératoires, notamment selon un mode dit de "friction pilotée" ou un mode dit de "friction inertielle".

Dans les deux modes, une première étape consiste, sous une pression préalablement définie, à mettre en contact la barre 3 et la paroi du trou 2 afin de déterminer la position exacte du contact entre les deux, la bride 1 restant fixe tout au long du procédé. La barre 3 est à cet effet déplacée, sur son axe 4, vers la surface de la bride 1, du côté de la face endroit 1' de la bride 1. Ainsi, ici, la portion de plus petit diamètre de la barre 3 est introduite par la portion endroit du trou 2, puis la barre 3 est déplacée jusqu'au contact de la surface tronconique de la barre 3 avec une portion de paroi du trou 2. Une fois la position de contact déterminée, la barre 3 est amenée à sa position de départ, c'est-à-dire à quelques millimètres en retrait de la paroi du trou 2 de la bride 1.

Dans le cas du mode de "friction pilotée", la barre 3, entraînée en rotation sur son axe 4, et la paroi du trou 2 sont mises en contact et s'échauffent mutuellement par friction, sous l'action également d'une force appliquée à la barre 3, suivant son axe 4, en direction de la bride 1. Après un certain temps d'échauffement, déterminé par l'homme du métier, une force axiale supplémentaire est appliquée, tandis que la rotation est freinée. La décélération de la rotation de la barre 3 jusqu'à l'arrêt se fait typiquement en 0,2 à 0,8 seconde et dépend de la faculté de décélération de la machine d'entraînement de la barre 3. Le soudage par friction se produit alors, la force axiale appliquée étant maintenue après l'arrêt de la rotation de la barre 3 afin d'assurer une bonne qualité de soudure.

Dans le cas du mode de "friction inertielle", la barre 3 est de la même façon placée en position de départ et entraînée en rotation. Lorsqu'elle est amenée en position de contact, son moteur d'entraînement en rotation est débrayé, si bien que l'énergie emmagasinée dans le système tournant, via la vitesse de rotation et le volant d'inertie du moteur, qui a été préalablement défini et dimensionné, est dissipée dans la soudure de la même façon que dans le cas du mode "friction pilotée".

Les modes opératoires décrits ci-dessus sont bien connus de l'homme du métier et ne seront pas décrits plus précisément. Ils n'ont été donnés qu'à titre d'illustration pour aider à la compréhension de l'invention, mais ne sont pas limitatifs du mode opératoire choisi pour le bouchage de trous par soudage par friction de l'invention. Il existe d'autres modes opératoires qui pourraient être mis en oeuvre pour le procédé de l'invention.

Quel que soit le mode opératoire choisi, l'homme du métier l'adaptera au procédé de l'invention, avec l'angle α existant entre l'axe 4 de la barre 3 et l'axe 5 du trou 2, et choisira les paramètres opératoires ad hoc, par exemple de manière empirique.

A titre d'illustration, des essais menés par la demanderesse ont montré que, dans le cas du bouchage d'un trou cylindrique de 10 mm de diamètre et de 6 mm de hauteur, c'est-à-dire un trou percé dans une bride de 6 mm d'épaisseur, l'angle α ne peut dépasser 11°, sous peine de s'exposer à une forte probabilité de présence d'entailles dans la zone de soudure.

D'une manière générale, en ne dépassant pas un angle α de 10°, il est généralement possible d'effectuer le procédé de bouchage par soudage par friction avec barre inclinée sans problèmes majeurs.

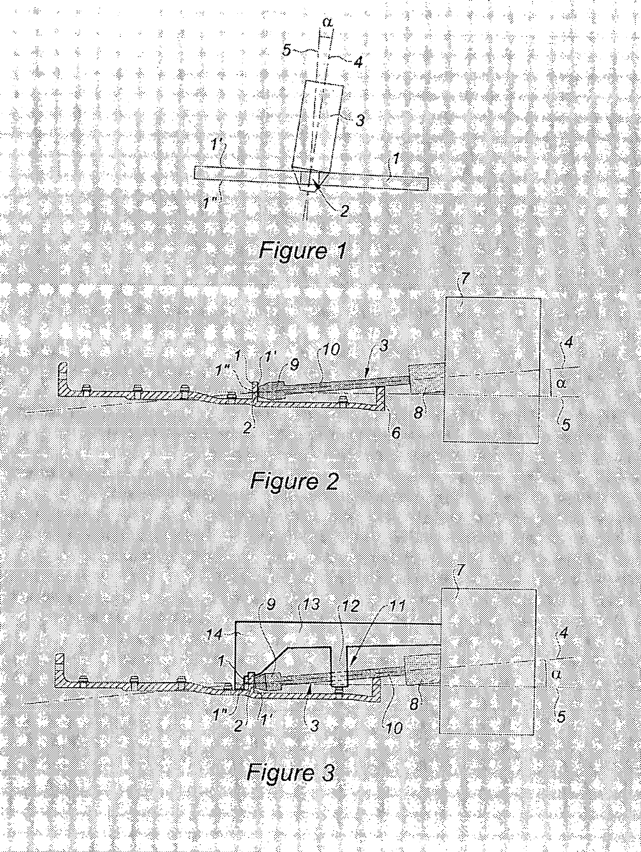

En référence à la figure 2, le procédé de bouchage par soudage par friction avec barre inclinée permet de boucher un trou 2 de bride 1 d'un carter de turboréacteur qui n'est pas accessible avec les procédés de l'art antérieur. Ainsi, sur la figure 2, on voit que dans l'axe 5 du trou 2 de la bride 1, du côté endroit 1', s'étend une autre bride 6, qui ne permet pas à une barre 3 de s'étendre perpendiculairement à la bride 1 tout en étant reliée à sa machine d'entraînement 7. On choisit donc d'incliner la barre 3 par rapport à l'axe 5 du trou 2 selon un angle α, dans le sens opposé à la surface du carter, ce qui permet à la barre 3 de passer au-delà de la bride 6 faisant obstacle, du fait de la portée entre l'extrémité de soudage de la barre 3 et les mords de serrage 8 qui la relient à la machine d'entraînement 7.

Afin de permettre à la barre 3 d'atteindre des trous encore plus difficiles d'accès, il est possible, toujours en relation à la figure 2, où les dimensions ne sont pas à l'échelle pour faciliter la compréhension, d'utiliser une barre 3 spécialement conçue pour le procédé de l'invention. Nous nommerons par la suite tête de soudage 9, ou tête 9, la portion soudante de la barre 3, c'est-à-dire la portion de la barre qui va être soudée par friction à la paroi du trou 2 pour le boucher.

Dans la forme de réalisation préférée de l'invention, afin d'améliorer sa capacité d'accès, la barre 3 comporte une tête 9 de dimensions minimale s pour assurer le soudage, c'est-à-dire dont les dimensions sont tout juste égales ou à peine supérieures aux dimensions nécessaires au bouchage du trou 2. La barre 3 comporte en outre, afin de soutenir, de placer et d'entraîner en rotation la tête 9, une tige rigide 10, de diamètre inférieur à celui de la tête 9, afin d'occuper moins d'espace, et d'une matière éventuellement différente.

La barre 3 de l'invention comporte ici une tête 9, de dimensions minimales, en alliage d'aluminium, soutenue par une tige rigide 10 en acier. L'encombrement de la tête 9 étant minimisé, elle peut accéder à des points plus difficiles d'accès, tandis que la tige 10 de faible diamètre autorise le contournement d'obstacles plus grands, pour un même angle α, qu'avec un diamètre plus grand.

Toutefois, afin d'accéder à certains trous de brides, il est nécessaire de disposer d'une barre 3 d'assez grande dimension axiale. La distance entre la tête 9 de la barre 3 et les mords de serrage 8 de son autre extrémité étant alors assez grande, il s'ensuit des vibrations au niveau de la tête 9, rédhibitoires pour la réalisation d'un soudage correct. En référence à la figure 3, un deuxième mode de réalisation du procédé de l'invention est représenté, permettant de réduire les vibrations en tête de barre 3.

Dans ce procédé, on utilise de la même façon que précédemment une barre 3, comportant éventuellement une tête 9 en aluminium et une tige rigide 10 en acier, de plus faible diamètre, pour boucher un trou 2 d'une bride 1, la barre étant mise en rotation par une machine d'entraînement 7, à laquelle elle est reliée par des mords 8, autour d'un axe 4. Le bouchage par soudage par friction est effectué avec la barre 3 faisant un angle α avec l'axe 5 du trou 2.

Ce procédé diffère du précédent par l'utilisation d'un palier intermédiaire 11. Ce palier 11 se situe dans une pièce support de palier 12, comportant, soit un alésage de passage de la tige 10, soit un roulement pour la tige 10, faisant office de palier 11 pour la barre 3, en un point défini sur la barre 3, par exemple au milieu de la barre 3, entre les mords de serrage 8 et la tête 9 de la barre 3. De préférence, il s'agira d'un roulement 11.

La pièce support de palier 12 peut être solidaire, indifféremment, de la pièce dont on veut boucher un trou 2, de la machine 7 d'entraînement de la barre 3 en rotation ou d'un outillage indépendant. Sur la figure 3, la pièce support de palier 12 est solidaire de la machine d'entraînement 7, grâce à une poutre 13 la supportant. La poutre 13 est solidaire de la machine 7 et s'étend perpendiculairement à la machine, globalement parallèlement à la pièce 1 à boucher.

Dans cette forme de réalisation, la poutre 13 comporte également, à son extrémité opposée à la machine 7, une pièce 14 de mise en appui sur la pièce à boucher. Cette pièce 14 est ici dimensionnée de façon à venir en appui, d'une part, sur la bride 1, d'autre part, sur une portion de surface du carter supportant la bride. Ainsi, la poutre 13, sa pièce d'extrémité 14 de mise en appui et sa pièce support de palier 12 sont dimensionnées de façon définie pour le bouchage d'un trou d'un type de bride particulier.

Il est aussi envisageable d'utiliser une pièce support de palier 12 pour la barre 3 qui soit tout à fait modulable en fonction de l'utilisation de la barre 3 qui est faite.

Quoiqu'il en soit, la pièce support de palier 12 permet de supporter la barre 3, au niveau ici de sa tige rigide en acier 10, tout en permettant sa rotation autour de son axe 4. Ce support réduit les vibrations occasionnées par la rotation au niveau de sa tête 9, puisqu'il diminue le bras de levier auquel est soumise la tête 9. Plusieurs pièces de supports 12 pourraient être utilisées pour une même barre.

L'angle α entre l'axe 4 de la barre de soudage 3 et l'axe 5 du trou 2 à boucher peut être réglable grâce à un mécanisme adapté de la machine d'entraînement 7, ou fixe pour une machine dédiée au bouchage d'un type de trou défini. Dans le cas où il serait réglable et où un palier intermédiaire 11 serait prévu, la pièce support de palier 12 serait également réglable pour s'adapter au réglage de l'angle α.

Le trou 2 peut déboucher de chaque côté de la pièce, ici la bride 1, ou ne déboucher que d'un côté.

Le procédé a été décrit en relation avec un trou s'étendant suivant un axe perpendiculaire à la surface de la pièce. Le trou pourrait être usiné de façon à s'étendre selon un axe faisant un angle non nul avec l'axe perpendiculaire à la surface de la pièce, le procédé étant mis en oeuvre de la même façon, en prenant comme référence pour l'angle α l'axe du trou.

Le procédé de l'invention a été décrit en relation avec une pièce à boucher en alliage d'aluminium, mais il va de soi qu'elle s'applique à tout type d'alliage, notamment des alliages de nickel, de titane ou de fer. Il a en outre été décrit en relation avec une barre comportant une tête de barre de même nature que la pièce à boucher, mais il pourra être utilisé une tête d'une nature différente.

## Revendications

1. Procédé de bouchage, par soudage par friction, d'un trou (2), s'étendant globalement selon un axe (5), d'une pièce métallique (1), un espace de dégagement n'étant pas disponible dans l'axe (5) du trou (2), du fait d'au moins un obstacle (6) sur cet axe (5), dans lequel une barre métallique (3), s'étendant globalement suivant un axe (4), est mise en rotation autour de son axe (4) et est introduite dans le trou (2), pour y être soudée par friction, **caractérisé par le fait que** l'axe (4) de la barre (3) est incliné par rapport à l'axe (5) du trou (2) d'un angle (α) non nul pour éviter l'obstacle (6).

2. Procédé selon la revendication 1, dans lequel l'angle (α) entre l'axe (4) de la barre (3) et l'axe (5) du trou (2) est inférieur ou égal à 11°.

3. Procédé selon l'une des revendication 1 ou 2, dans lequel la barre comporte une tête de soudage (9) de dimensions minimales pour assurer le soudage par friction, et une barre rigide (10) de diamètre inférieur à celui de la tête (9) et supportant la tête (9).

4. Procédé selon l'une des revendications 1 à 3, dans lequel la barre (3) est supportée, à une extrémité, par une machine d'entraînement (7), en au moins un point entre ses deux extrémités, par un palier intermédiaire (11).

5. Procédé selon l'une des revendications 1 à 4, dans lequel la pièce est une bride (1), en alliage d'aluminium, d'un carter d'un turboréacteur.

6. Procédé selon la revendication 3 et l'une des revendications 1 à 5, dans lequel la barre (3) comporte une tête (9) en alliage d'aluminium et une barre rigide (10) en acier.

7. Utilisation d'une barre métallique pour la mise en oeuvre d'un procédé de bouchage d'un trou par soudage par friction selon l'une des revendications 1 à 6, la barre comportant une tête de soudage (9) et une barre rigide (10) de diamètre inférieur au diamètre de la tête (9).

8. Utilisation d'une barre selon la revendication 7, dans laquelle la tête (9) de la barre comporte un alliage d'aluminium et la tige rigide (10) de la barre comporte de l'acier.

9. Utilisation d'une pièce support de palier dans la mise en oeuvre du procédé de bouchage de trou par soudage par friction selon la revendication 4 et l'une des revendications 1 à 6, dans laquelle la pièce comporte un palier intermédiaire (11) pour la barre de soudage (3).

10. Utilisation d'une pièce selon la revendication 9, dans laquelle le palier intermédiaire (11) est un palier à roulement.

## Claims

1. A friction plug welding method, for a hole (2), extending globally along an axis (5), in a metal part (1), failing any clearance space in the axis (5) of the hole (2), because of at least one obstacle (6) on said axis (5), wherein a metal bar (3), extending globally along an axis (4), is rotated around its axis (4) and is inserted into the hole (2), to be friction welded, **characterised in that** the axis (4) of the bar (3) is tilted with respect to the axis (5) of the hole (2) by a non-zero angle (α) to avoid the obstacle (6).

2. A method according to claim 1, wherein the angle (α) between the axis (4) of the bar (3) and the axis (5) of the hole (2) is smaller than or equal to 11°.

3. A method according to any of the claims 1 or 2, wherein the bar comprises a welding head (9) of minimum sizes to provide friction welding, and a stiff bar (10) of diameter smaller than that of the head (9) and supporting the head (9).

4. A method according to any of the claims 1 to 3, wherein the bar (3) is supported, at one end, by a driving machine (7), by at least one point between both its ends, by an intermediate bearing (11).

5. A method according to any of the claims 1 to 4, wherein the part is a flange (1), made of aluminium alloy, of a turbojet engine housing.

6. A method according to claim 3 and any of the claims 1 to 5, wherein the bar (3) includes a head (9) made of aluminium alloy and a stiff rod (10) made of steel.

7. A use of a metal bar for implementing a friction plug welding method for a hole according to one of the claims 1 to 6, the bar comprising a welding head (9) and a stiff bar (10) of diameter smaller than that of the head (9).

8. A use of a bar according to claim 7, wherein the head (9) of the bar includes an aluminium alloy and the stiff rod (10) of the bar includes steel.

9. A use of a bearing supporting part for implementing the friction plug welding method for a hole according to claim 5 and one of the claims 1 to 6, wherein the part comprises an intermediate bearing (11) for a welding bar (3).

10. A use of a part according to claim 9, wherein the intermediate bearing (11) is a roller bearing.

## Patentansprüche

1. Verfahren zum Verschließen durch Reibschweißen eines Lochs (2), das sich insgesamt an einer Achse (5) entlang erstreckt, eines Metallstücks (1), wobei in der Achse (5) des Lochs (2) aufgrund mindestens eines Hindernisses (6) auf dieser Achse (5) kein Freiraum verfügbar ist, wobei ein Metallstab (3), der sich insgesamt an einer Achse (4) entlang erstreckt, um seine Achse (4) herum gedreht wird und in das Loch (2) eingeführt wird, um dort reibgeschweißt zu werden, **dadurch gekennzeichnet, dass** die Achse (4) des Stabs (3) im Verhältnis zu der Achse (5) des Lochs (2) um einen Winkel (α), der ungleich Null ist, geneigt ist, um das Hindernis (6) zu vermeiden.

2. Verfahren nach Anspruch 1, wobei der Winkel (α) zwischen der Achse (4) des Stabs (3) und der Achse (5) des Lochs (2) kleiner oder gleich 11° ist.

3. Verfahren nach einem der Ansprüche 1 oder 2, wobei der Stab einen Schweißkopf (9) mit minimalen Abmessungen, um das Reibschweißen sicherzustellen, und einen starren Stab (10) mit einem kleineren Durchmesser als dem des Kopfes (9), und der den Kopf (9) abstützt, umfasst.

4. Verfahren nach einem der Ansprüche 1 bis 3, wobei der Stab (3) an einem Ende von einer Antriebsmaschine (7) an mindestens einem Punkt zwischen seinen beiden Enden von einem Zwischenlager (11) abgestützt wird.

5. Verfahren nach einem der Ansprüche 1 bis 4, wobei das Stück ein Flansch (1) aus Aluminiumlegierung eines Gehäuses eines Turboluftstrahltriebwerks ist.

6. Verfahren nach Anspruch 3 und einem der Ansprüche 1 bis 5, wobei der Stab (3) einen Kopf (9) aus Aluminiumlegierung und einen starren Stab (10) aus Stahl umfasst.

7. Verwendung eines Metallstabs zum Durchführen eines Verfahrens zum Verschließen eines Lochs durch Reibschweißen nach einem der Ansprüche 1 bis 6, wobei der Stab einen Schweißkopf (9) und einen starren Stab (10) mit einem Durchmesser, der geringer ist als der Durchmesser des Kopfes (9), umfasst.

8. Verwendung eines Stabs nach Anspruch 7, wobei der Kopf (9) des Stabs eine Aluminiumlegierung und der starre Schaft (10) des Stabs Stahl umfasst.

9. Verwendung eines Lagerabstützstücks bei der Durchführung des Verfahrens zum Verschließen eines Lochs durch Reibschweißen nach Anspruch 4 und einem der Ansprüche 1 bis 6, wobei das Stück ein Zwischenlager (11) für den Schweißstab (3) umfasst.

10. Verwendung eines Stücks nach Anspruch 9, wobei das Zwischenlager (11) ein Wälzlager ist.
